Europäisches Patentamt

European Patent Office

Office européen des brevets

(11) Publication number: **0 456 620 A1**

## EUROPEAN PATENT APPLICATION

(21) Application number: 91830184.7

(22) Date of filing: 03.05.91

(30) Priority: 07.05.90 IT 2022290

(43) Date of publication of application:
**13.11.91 Bulletin 91/46**

(84) Designated Contracting States:
**DE NL**

(51) Int. Cl.⁵: **A23G 1/04**, A23G 1/06,
A23G 1/08

(71) Applicant: **VITALI S.p.A.**
**Via Azzeccagarbugli, 5**
**I-22053 Lecco/Acquate (Como)(IT)**

(72) Inventor: **Vitali Antonio**
**c/o VITALI S.p.A., Via Azzeccagarbugli, 5**
**I-22053 Lecco (Como)(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) **Supporting upright for cacao seed squeezing pressing machines.**

㊄ A supporting upright comprises a tie-rod upright body which is provided with at least an end head portion axially adjoining a reduced diameter portion thereon operates a locking assembly which cooperates with the fixed structure of the pressing machine.

FIG. 1

## BACKGROUND OF THE INVENTION

The present invention relates to a supporting upright for cacao seed squeezing pressing machines, which upright is provided with fixing means which do not include any threaded portions and nut elements.

As is known, the cacao seed squeezing pressing machines usually comprise supporting uprights or "columns" which connect the several elements of the pressing machine.

These uprights are made from several materials, having mechanical parameters, and always use, as a locking system for locking the upright or column on the pressing machine, a coupling including a threaded portion on the upright, with related locking nut, and, possibly, with a nut and counter-nut elements.

This construction of the supporting uprights is sometimes affected by the problem that cracks are formed transversely of the upright central axis, at the first two or three threads, which cracks are probably due to a stress concentration on the thread "teeth"; in fact, these thread teeth have a bottom radius which is excessively small with respect to the stresses to be supported and since, on the other hand, an ideal radius would be so large that it could not be practically obtained.

Other known constructions provide for the use of a not threaded upright: in this case the uprights or columns are fixedly restrained at the two end portions of the pressing machines, that is the pressing machine cylinder and head, which, because of this reason, are usually made by two half portions.

This construction, however, requires a very complex machining of the cylinder and head of the pressing machine, with consequent great machining errors.

Moreover, the thus constructed uprights can not be used on other types of pressing machines, since the pressing machines must be constructed, each time, so as to be precisely fitted to a given type of supporting uprights.

These fixedly restrained uprights, moreover, can not be adjusted or "narrowed" and, furthermore, after years of operation, these uprights are subjected to stretchings and elongations, and become rather unreliable.

## SUMMARY OF THE INVENTION

Accordingly, the aim of the present invention is to overcome the above mentioned drawbacks, by providing a supporting upright for cacao seed pressing machines, which comprises restraining means which do not include any threads or nuts, and which allow a coupling to be easily made without using fixedly restrained systems, but using, on the contrary, an adjustable type of locking system.

Within the scope of the above mentioned aim, a main object of the present invention is to provide such a supporting upright which includes additional calibrating elements allowing a possible elongation of the upright to be easily offset, thereby providing in any case very reliable operation conditions.

Another object of the present invention is to provide such a supporting upright for cacao seed pressing machines which can be easily fitted to existing pressing machines including conventional uprights provided with thread portions and nuts.

Yet another object of the present invention is to provide such an upright for cacao seed pressing machines which is very simple construction-wise and very reliable in operation.

According to one aspect of the present invention, the above mentioned aim and objects, as well as yet other objects, which will become more apparent hereinafter, are achieved by a supporting upright for cacao seed pressing machines, including restraining means devoid of any threaded or nut portions, characterized in that said upright comprises a tie-rod upright body including, at at least an end portion thereof, a head portion axially adjoining a reduced diameter portion thereon a locking assembly can operate, said locking assembly cooperating with a fixed framework of said pressing machine.

## BRIEF DESCRIPTION OF THE DRAWINGS

Further characteristics and advantages of the present invention will become more apparent from the following detailed description of a preferred, though not exclusive, embodiment thereof, which is illustrated, by way of an indicative but not limitative example, in the figures of the accompanying drawings, where:

Figure 1 is a schematic cross-sectional view illustrating a first embodiment of a supporting upright for cacao seed squeezing pressing machines according to the present invention;

Figure 2 illustrates a second embodiment of the supporting upright according to the present invention;

Figure 3 illustrates a third embodiment of the supporting upright according to the present invention; and

Figure 4 illustrates a fourth embodiment of the supporting uprights according to the present invention.

## DESCRIPTION OF THE PREFERRED EMBODIMENTS

With reference to the figures of the accompanying drawings, the supporting upright or column, for cacao seed squeezing pressing machines according to the present invention, is provided with a tie-rod upright body, overally indicated at the reference number 1, which, in a per-se known manner, engages with a sleeve element 2, which is rigid with the fixed framework 3 of the pressing machine.

At one end of the tie-rod body 1 there is provided a flat head 10, of cylindric shape, which is coupled to the tie-rod body 1 by means of a reduced diameter portion including a cylindrical part 11 which, through concave regions 12, respectively connects to the tie-rod body and head.

In order to perform the locking operation, there are provided sleeve elements 15, cross-sectioned along a diametrical plane, and which can be clamped so as to house in their inside the head 10, and being moreover provided with lug portions 16 engaging in the cylindrical portion 11.

At the axial end portion of each sleeve element there is provided an abutment surface 17 which can directly rest against the end portion of the sleeve element 2, or can be engaged with said sleeve element 2 through the interposition of calibrated small ring elements 18, which can be made with several axial dimensions and which are also made by two ring elements which can be clamped to one another.

Thus, a firm axial coupling is obtained, without using threaded portions or nut elements.

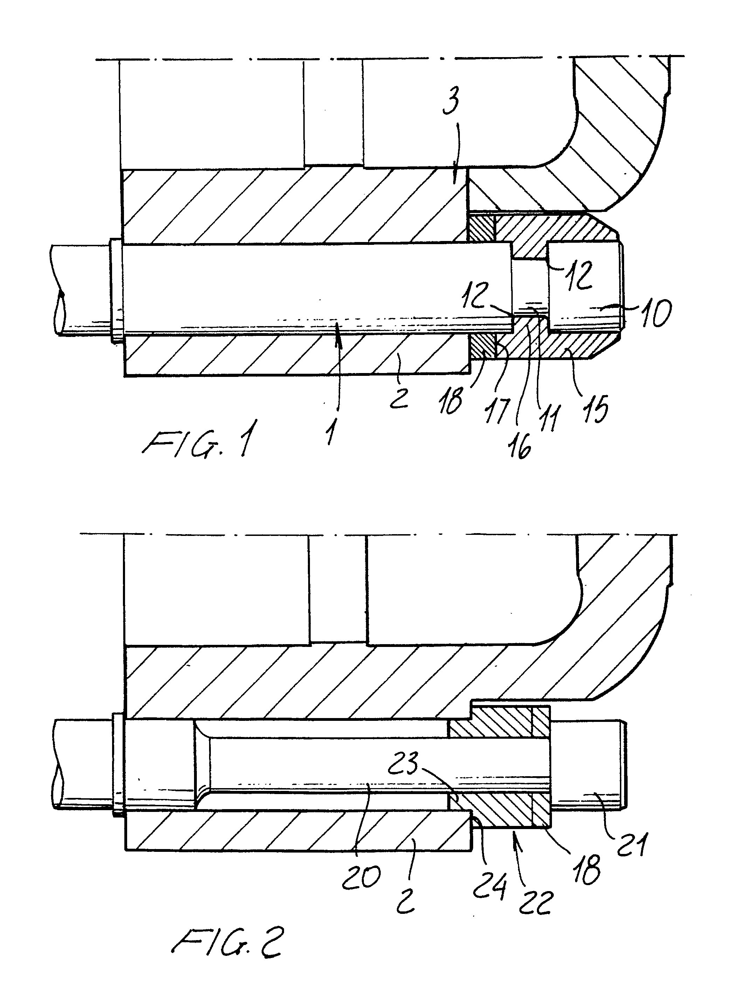

As is clearly shown in figure 2, the tie-rod body 1 is provided with a reduced portion 20, formed on a portion of the sleeve element, still indicated at 2, which ends with a cylindrical head 21.

At the reduced portion, a locking body 22 is provided, which comprises both a reduced diameter region 23, which is introduced into the sleeve element, and a shoulder 24, of greater diameter, which directly abuts against the sleeve element.

The locking body 2, at the opposite end portion thereof, is engaged by the base portion of the cylindrical head 21, possibly with the interposition of calibrated small ring elements, indicated at 18.

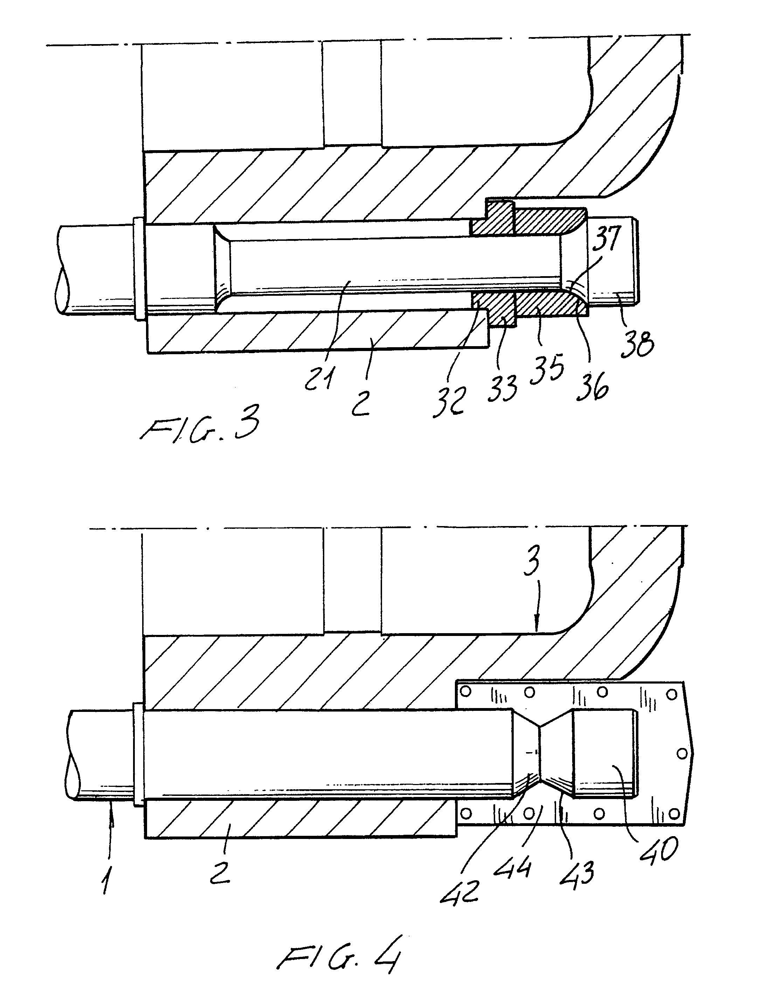

In the embodiment shown in figure 3, the tie-rod body 1 is provided with a reduced portion, always indicated at 21, which is restrained within the sleeve element; a locking body is herein moreover provided, encompassing a portion of the reduced diameter region, and which can be partially introduced into the sleeve element, with its reduced portion 32, and engaging with the shoulder of said sleeve element, at an enlarged region 33.

Between the locking body and the head of the screw, an intermediate body is provided, overally indicated at 35, which comprises a tapering portion 36 engaging in the substantially frustum of cone shape connecting portion 37, coupling the head 38 to the reduced diameter portion.

In this case, the locking body, as it should be apparent, can be directly adjusted.

As is clearly shown in figure 4, the locking assembly comprises a tie-rod body, always indicated at the reference number 1 which, at the head portion 40, is provided with a reduced diameter portion, formed by a double taper portion 42 which is engaged in a corresponding seat 43 defined by a pair of plates 44 which can be clamped to one another and caused to abut against the axial end portion of the sleeve element.

With the disclosed arrangement of the above illustrated embodiments, it should be pointed out that the upright is provided, at the stressed portion thereof, with a larger cross-section than the threaded portions and, accordingly, the upright will be not subjected to any appreciable wear.

Moreover, a possible elongation of the upright can be easily offset by simply using calibrated ring elements or directly adjusting the locking body, without the need of performing claming operations on nut elements and the like, as it is necessary in prior uprights for the intended application.

While the invention has been disclosed and illustrated with reference to a preferred embodiment thereof, it should be apparent that the disclosed embodiment is susceptible to several modifications and variations all of which will come within the spirit and scope of the appended Claims.

**Claims**

1. A supporting upright for cacao seed pressing machines, including restraining means devoid of any threaded or nut portions, characterized in that said upright comprises a tie-rod upright body including, at at least an end portion thereof, a head portion axially adjoining a reduced diameter portion thereon a locking assembly can operate, said locking assembly cooperating with a fixed framework of said pressing machine.

2. A supporting upright, according to Claim 1, wherein said reduced diameter portion comprises a cylindrical portion arranged between said tie-rod body and head, and coupled to said tie-rod body and head by coupling concave regions, said tie-rod body being housed in a sleeve element rigid with said fixed framework of said pressing machine, against said sleeve element an axial end portion of a locking body abuting, said locking body including two diametrically separated and assemblable elements, said locking body being moreover provided with a lug portion which can be engaged in the reduced portion of said tie-rod body.

3. A supporting upright, according to Claim 2, wherein said tie-rod body is provided, at said sleeve element, with a reduced diameter portion coupled to said head, with said reduced diameter portion a locking body engaging which comprises a reduced diameter region which can be introduced into said sleeve element, and an enlarged region which can be abutted against an axial end portion of said sleeve element and against said head.

4. A supporting upright, according to Claim 3, wherein said head is connected to said reduced diameter portion by a substantially frustum of cone shaped tapering portion, which can be engaged with a further frustum of cone shaped tapering portion of a spacer block arranged between a body partially introduced into said sleeve element and axially abutting against said sleeve element and head.

5. A supporting upright, according to Claim 3, wherein said head is coupled to said tie-rod body by a double-tapering portion and a pair of plates being moreover provided which are adapted to clamp therebetween said head and abutting against the axial end portion of said sleeve element.

6. A supporting upright, according to Claim 1, wherein said supporting upright further comprises spacer ring elements arranged between said sleeve element and head.

FIG. 1

FIG. 2

FIG. 3

FIG. 4

European
Patent Office

EUROPEAN SEARCH
REPORT

Application Number

EP 91 83 0184

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-2 557 056 (H. BAUERMEISTER MASCHINEN-FABRIK GMBH) <br> * claims 1-5; figure 4 * <br> − − − | 1 | A 23 G 1/04 <br> A 23 G 1/06 <br> A 23 G 1/08 |
| A | DE-A-2 821 316 (MACHINENFABRIK DUYVIS B.V.) <br> * claims 1-4; figures 2,3 * <br> − − − − − | 1 | |

**TECHNICAL FIELDS SEARCHED (Int. Cl.5)**

A 23 G 1/00

The present search report has been drawn up for all claims

| Place of search | Date of completion of search | Examiner |
|---|---|---|
| Berlin | 19 July 91 | SCHULTZE D |